# EUROPEAN PATENT SPECIFICATION

(11) **EP 4 212 993 B1**
(45) Date of publication and mention of the grant of the patent: **09.12.2026**
(21) Application number: 23152401.8
(22) Date of filing: 01.06.2017
(51) Int. Cl.: G06F 1/26

(54) **SYSTEMS, APPARATUS, AND METHODS FOR POWERING ELECTRONIC DEVICES WITH LOW VOLTAGE BATTERIES**
SYSTEME, VORRICHTUNG UND VERFAHREN ZUR VERSORGUNG ELEKTRONISCHER VORRICHTUNGEN MIT NIEDERSPANNUNGSBATTERIEN
SYSTÈMES, APPAREIL ET PROCÉDÉS D'ALIMENTATION DE DISPOSITIFS ÉLECTRONIQUES AVEC DES BATTERIES BASSE TENSION

(30) Priority: 01.06.2016 US 201662344383 P
(43) Date of publication of application: 19.07.2023
(62) Document number(s) of the earlier application(s) in accordance with Art. 76 EPC: 17729069.9 / 3 465 379
(73) Proprietor: Ascensia Diabetes Care Holdings AG, 4052 Basel (CH)
(72) Inventor: Gofman, Igor Y., New York, 10520 (US)
(74) Representative: Cohausz & Florack

(56) References cited:
- US-A1- 2016 054 786
- US-B1- 6 388 343
- US-B1- 7 221 355

## Description

### FIELD

The present invention relates to powering electronic devices, and more specifically to systems, apparatus, and methods for powering such devices with low voltage batteries.

### BACKGROUND

Optimizing the power consumption of electronic devices that run on battery power in order to maximize both stand-by and run time while providing stable, reliable operating performance is a complex problem. Electronic devices can be powered by many different batteries based on different chemistries that generate different voltages. Typically, the circuitry used to control consumption of the battery power is primarily designed to insure that the correct voltage and power are supplied to the powered devices (e.g., a microprocessor). Reducing stand-by power drain is typically a secondary consideration but in low power electronics that desirably only call for low power batteries, stand-by power drain can be a significant problem. Thus, what is needed are improved systems, apparatus, and methods for eliminating external power drain from batteries while in stand-by mode. Document US 6 388 343 B1 relates to a power supply unit using a momentary type power switch and an electronic apparatus using the power supply unit. More particularly, the present invention pertains to a power supply unit realizing a remote power on/off scheme using the momentary switch and an electronic apparatus unit using the power supply unit. Further, document US 7 221 355 B1 relates to a low standby power circuit used in a pointing device, such as might be used in a locator system. In addition, document US 2016/0054786 A1 relates to a method and system for ground plane isolation, in particular in USB environment.

### SUMMARY

The invention is defined by the appended independent claim 1 and advantageous embodiments of the invention are indicated in the dependent claims.

Furthermore, an apparatus is disclosed for powering electronic devices with low voltage batteries. The apparatus includes a circuit including a transistor having a base, an emitter, and a collector; a microcontroller having an output port, a system power terminal, and an input port; a first signal generated from the output port of the microcontroller and coupled to an enable pin of a DC-DC booster; and a second signal generated from the output port of the microcontroller and coupled to the base of the transistor, wherein the second signal is an inverted version of the first signal. The emitter of the transistor is coupled to ground and the collector of the transistor is coupled to the enable pin of the DC-DC booster.

Furthermore, a method of powering electronic devices using low voltage batteries is disclosed. The method includes providing a circuit with a first transistor having a base, an emitter, and a collector, wherein the emitter is coupled to ground and the collector is coupled to an enable pin of a DC-DC booster; providing a microcontroller having an output port, a system power terminal, and an input port; generating a first signal from the output port of the microcontroller; transmitting the first signal to the enable pin of the DC-DC booster; generating a second signal from the output port of the microcontroller, wherein the second signal is an inverted version of the first signal; and transmitting the second signal to the base of the first transistor.

Furthermore, a system for powering a blood glucose meter using a low voltage battery is provided. The system includes a microcontroller having an output port, a system power terminal, an input port, data terminals, and control terminals; a sensor port for receiving a blood glucose sensor, the port coupled to the data terminals and control terminals of the microcontroller; a first signal generated from the output port of the microcontroller and coupled to an enable pin of a DC-DC booster; a first transistor having a base, an emitter, and a collector; and a second signal generated from the output port of the microcontroller and coupled to the base of the first transistor, wherein the second signal is an inverted version of the first signal. The emitter of the first transistor is coupled to ground and the collector of the first transistor is coupled to the enable pin of the DC-DC booster.

Still other features, aspects, and advantages of the present invention will become more fully apparent from the following detailed description, the appended claims, and the accompanying drawings by illustrating a number of exemplary embodiments and implementations, including the best mode contemplated for carrying out the present invention. Embodiments of the present invention may also be capable of other and different applications, and its several details may be modified in various respects, all without departing from scope of the present invention. Accordingly, the drawings and descriptions are to be regarded as illustrative in nature, and not as restrictive. The drawings are not necessarily drawn to scale. The description is intended to cover all modifications, equivalents, and alternatives falling within the spirit and scope of the claims.

### BRIEF DESCRIPTION OF THE DRAWINGS

FIG. 1 is a schematic diagram depicting a prior art circuit using a momentary switch.
FIG. 2 is a timing diagram for the circuit of FIG. 1.
FIG. 3 is a schematic diagram depicting an example circuit according to embodiments of the present invention.
FIG. 4A is a timing diagram for the circuit of FIG. 3.
FIG. 4B is a SPICE simulation of the circuit of FIG. 3.
FIG. 5 is a schematic diagram depicting an example circuit according to embodiments of the present invention.

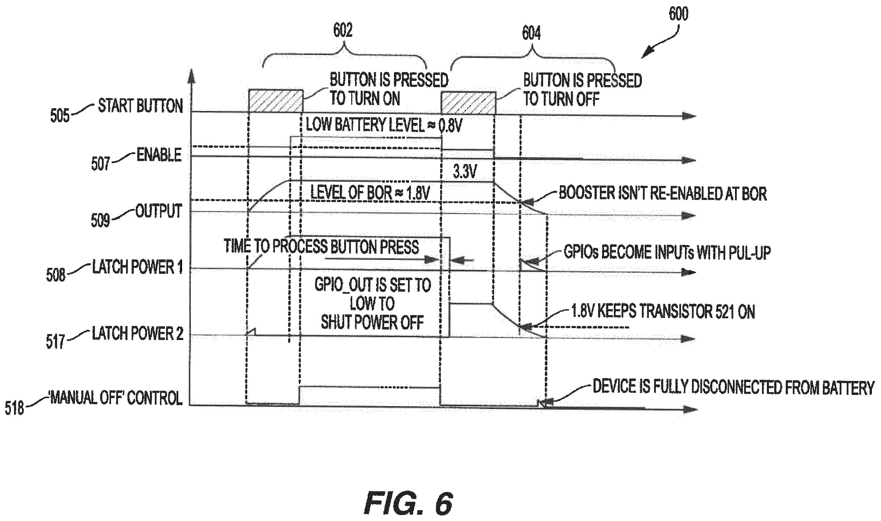

FIG. 6 is a timing diagram for the circuit of FIG. 5.
FIG. 7 depicts voltage over time graphs of example batteries.
FIG. 8 is a schematic diagram depicting a prior art circuit using a toggle switch.
FIG. 9 is a schematic diagram depicting a prior art circuit using a battery isolation pull tab.
FIG. 10 is a schematic diagram depicting an example circuit according to alternate embodiments of the present invention.
FIG. 11 is a timing diagram for the circuit of FIG. 10.

### DETAILED DESCRIPTION

Embodiments of the present invention provide systems, apparatus, and methods for powering electronic devices with low voltage batteries. Embodiments provide means to concurrently use a single cell low voltage battery (*e.g.*, alkaline, zinc oxide, silver oxide, *etc*.), a momentary switch for manually turning an electronic device ON and OFF, the ability to turn the electronic device OFF automatically, and to reduce "sleep current" or stand-by power consumption of the electronic device to zero. Existing, prior art circuits do not allow the combination of all of these features.

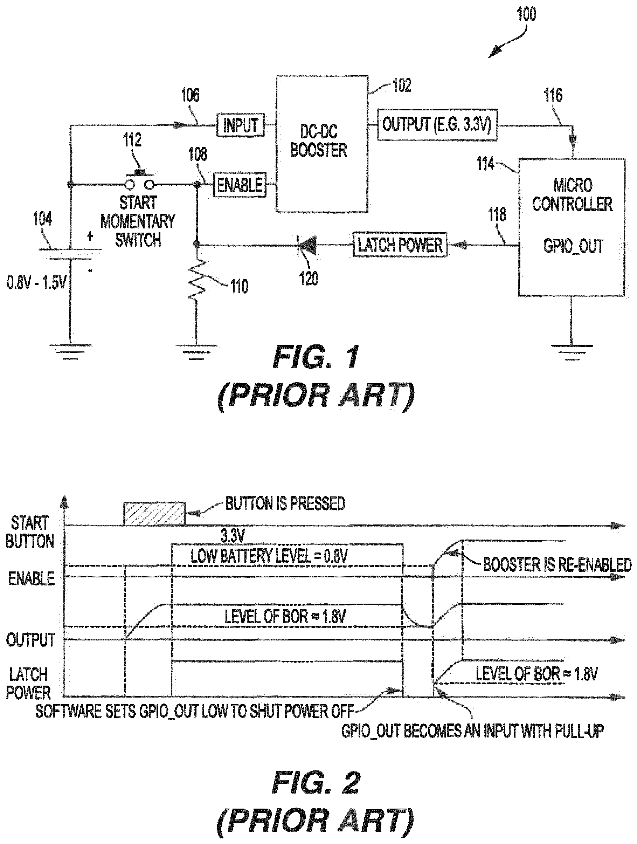

Electronic devices that do not use a real time clock can be completely unpowered while in sleep mode. A conventional solution for implementing a sleep or stand-by mode that is used in many handheld electronic devices is shown in the circuit 100 of FIG. 1. The timing diagram for the circuit 100 of FIG. 1 is shown in FIG. 2. The entire circuit 100 is completely unpowered in sleep mode because the booster 102 is disabled. However, the battery 104 remains connected to the booster 102. Typical leakage current through the INPUT pin coupled to node 106 when the booster 102 is disabled is negligible (typically < 0.1uA). In sleep mode the booster 102 is disabled because booster enable pin 108 is pulled down via resistor 110. When the user engages the momentary switch 112, the DC-DC booster 102 becomes enabled and starts working. The microcontroller 114 gets power via booster output voltage 116.

The booster voltage can be set to 3.3V or other voltage required by the microcontroller's specification. At start-up the microcontroller 114 generates a high level signal on node 118 "LATCH POWER" that reaches booster enable pin 108 through diode 120 and the booster's enable pin 108 is thus latched up. Even after the user releases the momentary switch 112, the booster 102 continues to work. The diode 120 protects the GPIO_OUT pin of the microcontroller 114 from battery voltage when the switch 112 is engaged but the microcontroller 114 still pulls the GPIO_OUT pin down.

A first issue with the approach of circuit 100 is that this circuit 100 does not allow the user to turn power OFF manually by, for example, pressing the momentary switch 112. Note that when the battery 104 has partially run down, the voltage is too low (*e.g.,* 0.8V) to be considered as a logic level voltage that can be recognized and processed by the microcontroller 303.

A second issue with circuit 100 is that this approach will not work reliably with microcontrollers that have a brownout reset (BOR) function which is commonly implemented in many current devices. A brownout reset function is implemented using a circuit inside the microcontroller 114 that resets (or reboots) the microcontroller 114 in the event of a brownout, *i.e.,* a significant drop in the power supply output voltage. Typically, during a BOR the microcontroller 114 sets all GPIO pins into input mode with pull-up resistors. This affects the circuit 100 shown in FIG. 1 when the device is shutting down. A typical trigger level for BOR is in the range of 1.5V to 2.0V.

The circuit 100 shown in FIG. 1 can be unpowered by the microcontroller 114 only when an inactivity time out period has expired. An example of an ineffective powering OFF sequence is shown below and in the timing diagram of FIG. 2.
- To initiate shut down, the microcontroller 114 sets GPIO_OUT pin to low in response to an instruction
- ENABLE pin 108 becomes low via resistor 110
- The DC-DC booster 102 turns off
- Output voltage 116 decays
- Once the output voltage 116 decays down to a BOR level (typical threshold varies from 1.5V to 2.0V), the microcontroller 114 resets and all the pins immediately behave as inputs with pull-up resistors
- The signal level on node 118 at the GPIO_OUT pin becomes equal to the BOR level (1.5V - 2.0V) via an internal pull-up resistor
- The typical voltage to enable the booster 102 is 0.75V and thus the BOR threshold is large enough to re-enable the DC-DC booster 102
- The booster 102 will start working again providing voltage 116 to the microcontroller 114
- The microcontroller 114 will generate the signal "LATCH POWER" and the cycle will start again
In other words, the circuit 100 of FIG. 1 will endlessly loop trying to shut down until the battery 104 is drained. This means that such a circuit 100 cannot be shut down automatically by itself (*e.g.*, programmatically).

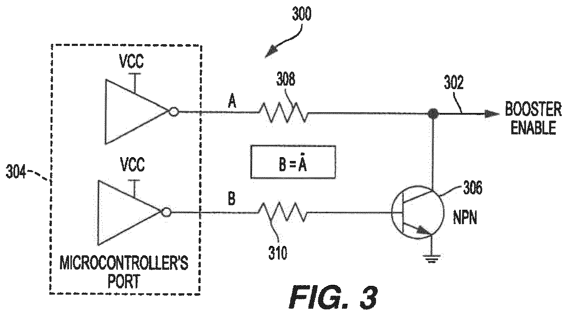

Embodiments of the present invention provide a solution to the above drawbacks of the prior art. Embodiments allow the user to reliably un-power a microcontroller manually as well as allow the microcontroller to power itself down automatically (*e.g.,* after an inactivity period (*e.g.,* a time out period ends and the microcontroller issues a shut down instruction)). The partial circuit 300 of FIG. 3 illustrates the basic theory of embodiments of the present invention.

In FIG. 3, The Booster ENABLE line 302 can be reliably controlled even if the microcontroller has lost control due to low voltage. The signal on the Booster ENABLE line 302 is formed by two antiphase signals A and B that are generated from the same port 304 of the microcontroller. Signal A is connected to the Booster ENABLE line 302 via resister 308 and signal B is connected to Booster ENABLE line 302 via resister 310 and NPN transistor 306. To enable the booster (not shown in FIG. 3 but coupled to the Booster ENABLE line 302 via an enable pin), the signal A is required to be high and the signal B is required to be low. The NPN transistor 306 is OFF when signal B is low and the Booster ENABLE line 302 is thus high. To disable the booster and shut OFF the device, the microcontroller brings both A and B signals to a low level. The NPN transistor 306 still remains OFF but the Booster ENABLE line 302 becomes low because its source (signal A) is low. Since the booster is not operating, the power is decaying and eventually the microcontroller reaches the BOR state. In the BOR mode, both the A and B signals become high. Signal B, being high, turns on the NPN transistor 306 and the signal on the Booster ENABLE line 302 is pulled to low despite signal A being high. The microcontroller's power continues decaying, the microcontroller stops working and losses control on GPIOs. The behaviors of both signals A and B become unpredictable (they can be high or low) but they behave the same as each other because both of them come from the same port 304.

A truth table illustrating the relationship is shown below:

| Signal A | Signal B | State of NPN Transistor | Signal to Booster ENABLE |
|---|---|---|---|
| Low | Low | OFF | Low |
| Low | High | ON | Low |
| High | Low | OFF | High |
| High | High | ON | Low |

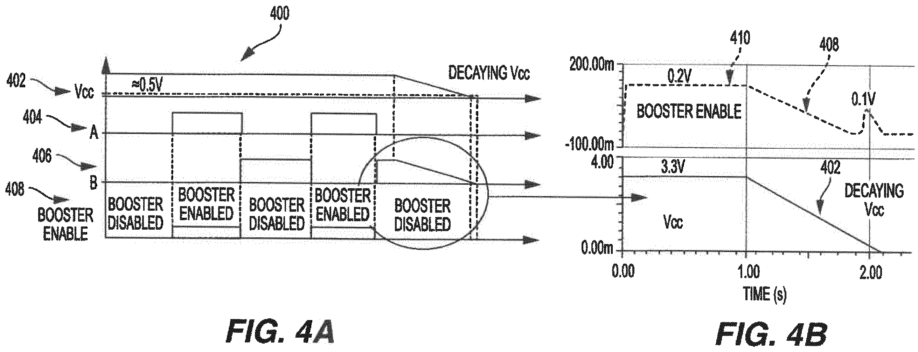

Note that the Booster ENABLE signal is High only when A = High and B = Low. In all other cases, the Booster ENABLE is low and decaying voltage does not affect the Booster ENABLE. This means that this solution allows reliably shutting OFF the entire device without re-enabling the booster (as prior art circuits would do as illustrated above). A timing diagram 400 is shown in FIG. 4A and output 410 of a simulation using a Simulation Program with Integrated Circuit Emphasis (SPICE) is shown in FIG. 4B. In FIG. 4A, the timing diagram 400 includes curves plotted over time representing Vcc 402, signal A 404, signal B 406, and the Booster ENABLE signal 408. The SPICE simulation output 410 in FIG. 4B shows the decaying of V_{CC} 402 to zero with the Booster ENABLE signal 408 going to zero.

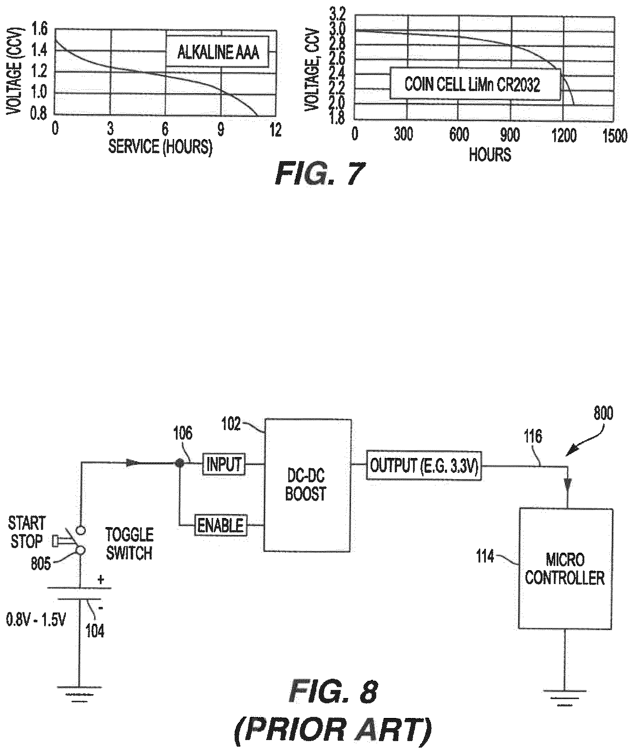

As mentioned above, handheld electronic devices can be powered from different batteries based on different chemistries that generate different voltages. Some batteries provide relatively high voltage (*e.g.* LiMn which can go up to 3V) and can directly drive most microcontrollers. Unfortunately, these batteries provide very low current and sometimes the device draws a higher current. Unlike LiMn batteries, alkaline batteries can provide high power. These batteries are utilized in many consumer electronics devices. The voltage of alkaline batteries starts from 1.5V and becomes very low (*e.g.,* 0.8V) at the end of the battery's life. Due to this low voltage, most microcontrollers cannot be powered directly from alkaline batteries. FIG. 7 depicts typical performance (*i.e.,* voltage over time) curves for typical batteries. In many applications, microcontrollers use at least approximately 3V (*e.g.,* 3.3V or so) to be able to control other devices. These microcontrollers may consume relatively higher power which is more than a 3V LiMn battery can provide. In such cases, a LiMn battery is not an option due to its low power capability. An alkaline battery can meet the power requirement but its voltage output can drop down to 0.8V when the microcontroller still requires at least of 3V. In this case, the battery voltage is boosted using a DC-DC booster.

Controlling or managing voltage is a challenging task that depends on how the booster is being turned ON/OFF. Generally, there are three different ways to manage the device with a low voltage booster: using a manual toggle switch, continuously keeping the device powered, and using a momentary push button. In contrast to embodiments of the present invention illustrated above, a typical basic approach of using a toggle switch 805 is shown in the prior art circuit 800 of FIG. 8. The entire circuit 800 can be powered and unpowered by toggling the switch 805 coupled to the battery 104. This method provides a simple but limited solution for no current consumption occurring in the sleep mode since node 106 (coupled to the input and enable pins), and consequently DC-DC booster 102, receives no power. However, the toggle switch 805 is a bulky, inconvenient and expensive electromechanical device that cannot be used in applications that require automatic shut off when a time out period has expired. Typically a toggle switch is used in electronic toys and is not used in modern handheld electronic devices, particularly a toggle is not suitable for use in blood glucose meters.

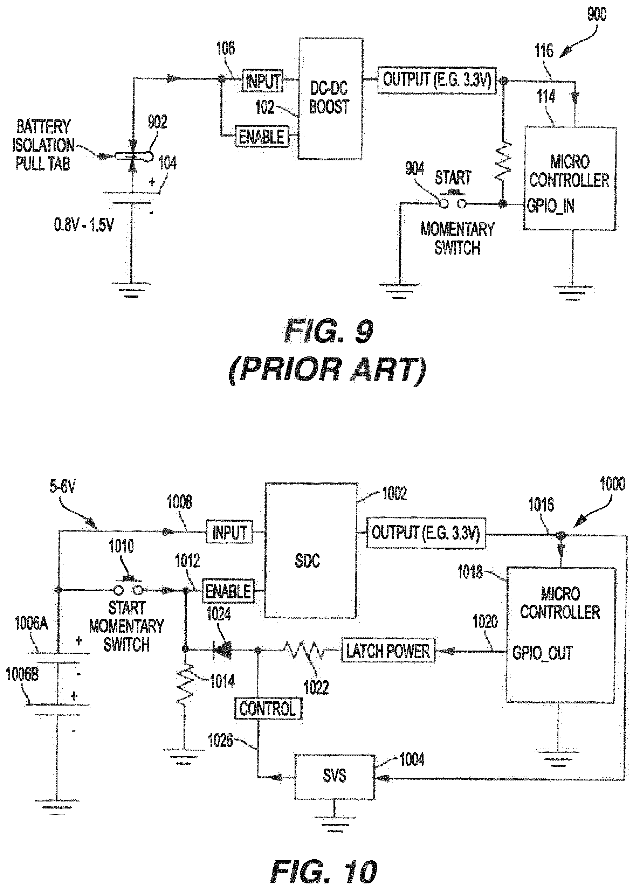

A typical approach using a continuously powered device is illustrated in the prior art circuit 900 of FIG. 9. To prevent continuous battery draining, the device typically comes from the manufacturer with a plastic battery isolation pull tab 902. The pull tab 902 has to be removed by the user. After removing the pull tab 902 the DC-DC booster 102 starts working. Unfortunately, once the pull tab 902 is removed, this circuit 900 always consumes power and drains the battery 104, even when the microcontroller 114 is in sleep mode (which can be activated using switch 904 and resistor 906 coupled to the Booster output voltage 116). While this approach is the least expensive for the manufacturer, as soon as the pull tab 902 is removed, the battery 104 is continuously draining and the user incurs the cost or inconvenience of replacing or recharging the battery 104. Solutions utilizing this idea typically require special low power DC-DC boosters that are still efficient at very low load current. However, even the most efficient DC-DC boosters running in ultra-low power mode still consume power. For instance, a very efficient booster commercially available from Texas Instruments, model TPS610981, continuously drains approximately 12uA which is very significant in comparison to some electronic devices such as blood glucose meters which can use only 2uA to 5uA.

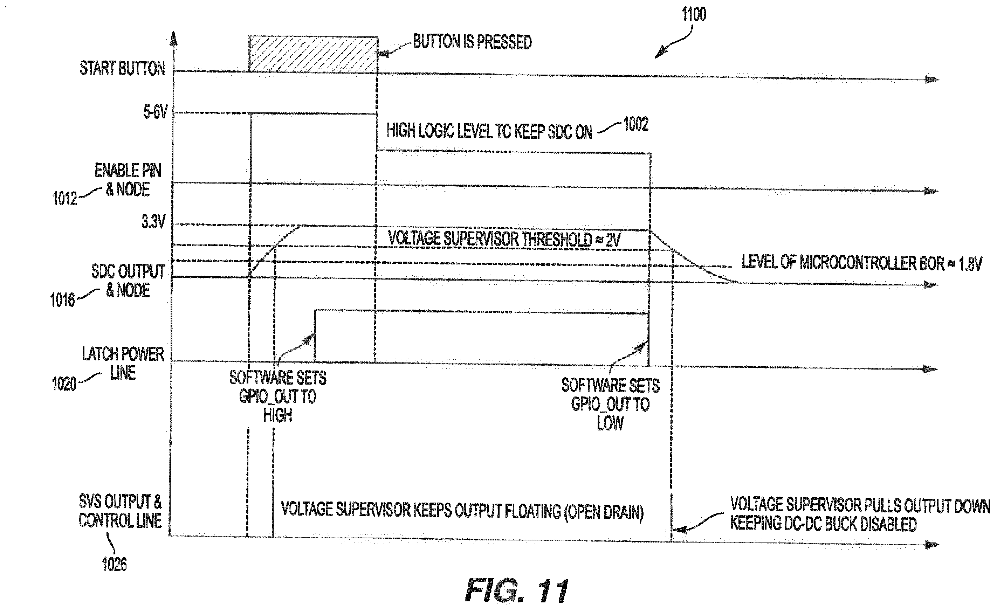

FIGs. 10 and 11 depict an alternative example embodiment of the present invention for use with relatively higher voltage batteries. Popular batteries such as Li-Ion and Li-Po provide relatively high voltage (*e.g.*, up to 4.2V). However, most industrial microcontrollers require a lower voltage. A standard typical microcontroller system voltage is 3.3V. Thus, instead of a DC-DC booster (as in the above described embodiment), it may be desirable to use a step down converter such as a buck converter or a low-dropout regulator. A buck converter (*i.e.,* step-down converter) is a DC-to-DC power converter which steps down voltage (while stepping up current) from its input (supply) to its output (load). A low-dropout or LDO regulator is a DC linear voltage regulator that can regulate the output voltage even when the supply voltage is very close to the output voltage. FIG. 10 illustrates a circuit 1000 that includes a step down converter (SDC 1002) and a supply voltage supervisor (SVS 1004). Supply Voltage Supervisor (supply voltage supervisory circuit) circuits are typically used to monitor the supply voltage to embedded and other micro-controller systems for under voltage conditions. In conventional use, if an under voltage condition is detected then the supervisory circuit will reset the controller and keep it in that state as long as the under voltage condition persists, still drawing power. FIG. 11 is a timing diagram 1100 that illustrates operation of example circuit 1000.

In the example circuit 1000 depicted, batteries 1006A, 1006B initially outputting approximately 5V or more are coupled in series to node 1008 which is coupled to the input pin of the SDC 1002. Momentary switch 1010 is also coupled to the batteries 1006A, 1006B and to node 1012 which is coupled to the enable pin of the SDC 1002 and pull down resistor 1014. The output of the SDC 1002 is coupled to node 1016 which is coupled to the power supply input of the microcontroller 1018 and the input of the SVS 1004. The GPIO_OUT pin of the microcontroller 1018 is coupled to the latch power line 1020 which is coupled to node 1012 (and the enable pin of the SDC 1002) via resistor 1022 and diode 1024. The output of the SVS 1004 is coupled to node 1012 (and the enable pin of the SDC 1002) via control line 1026 and diode 1024. An example of a commercially available SVS 1004 is the model TPS3600 SVS chip manufactured by Texas Instruments Incorporated.

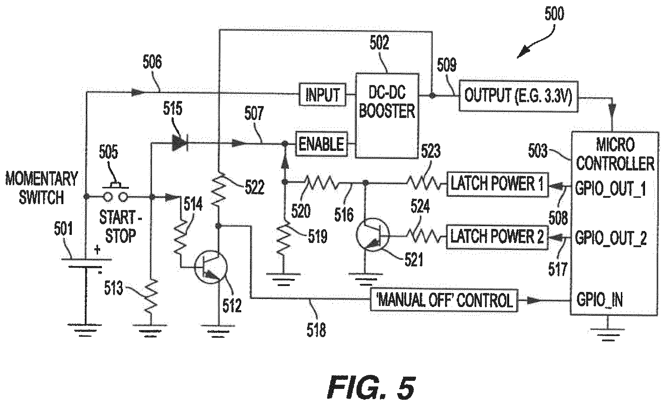

As with the example embodiment of FIG. 5, the example embodiment of FIG. 10 allows the circuit 1000 to reduce battery drain to zero in stand-by mode, provide the user the ability to turn the device on and off using a momentary switch, and to allow the microcontroller to automatically shut itself down programmatically (*e.g.*, after a predefined period of the device not being used). With reference to the timing diagram 1100 of FIG. 11, in operation the example circuit 1000 can be shut down via the following sequence:
- The microcontroller 1018 (*e.g.,* via software instructions) sets the GPIO_OUT pin (and consequently the latch power line 1020) to logic low
- Node 1012 (ENABLE pin) becomes low via resistor 1014
- SDC 1002 stops working
- SDC OUTPUT Voltage (Node 1016) starts decaying
- When OUTPUT Voltage (Node 1016) approaches the SVS Threshold (*e.g.,* 2V) the SVS Output (Control Line 1026) is pulled down
- The SVS Output (Control Line 1026) remains at logic low until the SDC OUTPUT Voltage (Node 1016) drops below ≈ 0.85V. At ≈ 0.85V and below the SVS 1004 losses control and the SVS Output (Control Line 1026) may become floating again
- However, the voltage of ≈ 0.85V is significantly below the microcontroller 1018 operating range, so all the microcontroller pins are inactive (floating) and cannot cause re-enabling of the SDC 1002
- With further decaying of the SDC OUTPUT Voltage (Node 1016), the brown out reset (BOR) threshold of the microcontroller 1018 is passed while the SVS 1004 maintains the SDC 1002 in an OFF state

Numerous embodiments are described in this disclosure, and are presented for illustrative purposes only. The described embodiments are not, and are not intended to be, limiting in any sense. The presently disclosed invention(s) are widely applicable to numerous embodiments, as is readily apparent from the disclosure. One of ordinary skill in the art will recognize that the disclosed invention(s) may be practiced with various modifications and alterations, such as structural, logical, software, and electrical modifications. Although particular features of the disclosed invention(s) may be described with reference to one or more particular embodiments and / or drawings, it should be understood that such features are not limited to usage in the one or more particular embodiments or drawings with reference to which they are described, unless expressly specified otherwise.

The present disclosure is neither a literal description of all embodiments nor a listing of features of the invention that must be present in all embodiments.

The Title (set forth at the beginning of the first page of this disclosure) is not to be taken as limiting in any way as the scope of the disclosed invention(s).

The term "product" means any machine, manufacture and / or composition of matter as contemplated by 35 U.S.C. §101, unless expressly specified otherwise.

The terms "an embodiment", "embodiment", "embodiments", "the embodiment", "the embodiments", "one or more embodiments", "some embodiments", "one embodiment" and the like mean "one or more (but not all) disclosed embodiments", unless expressly specified otherwise.

The terms "the invention" and "the present invention" and the like mean "one or more embodiments of the present invention."

A reference to "another embodiment" in describing an embodiment does not imply that the referenced embodiment is mutually exclusive with another embodiment (*e.g.*, an embodiment described before the referenced embodiment), unless expressly specified otherwise.

The terms "including", "comprising" and variations thereof mean "including but not limited to", unless expressly specified otherwise.

The terms "a", "an" and "the" mean "one or more", unless expressly specified otherwise.

The term "and/or", when such term is used to modify a list of things or possibilities (such as an enumerated list of possibilities) means that any combination of one or more of the things or possibilities is intended, such that while in some embodiments any single one of the things or possibilities may be sufficient in other embodiments two or more (or even each of) the things or possibilities in the list may be preferred, unless expressly specified otherwise. Thus for example, a list of "a, b and/or c" means that any of the following interpretations would be appropriate: (i) each of "a", "b" and "c"; (ii) "a" and "b"; (iii) "a" and "c"; (iv) "b" and "c"; (v) only "a"; (vi) only "b"; and (vii) only "c."

The term "plurality" means "two or more", unless expressly specified otherwise.

The phrase "at least one of", when such phrase modifies a plurality of things (such as an enumerated list of things) means any combination of one or more of those things, unless expressly specified otherwise. For example, the phrase at least one of a widget, a car and a wheel means either (i) a widget, (ii) a car, (iii) a wheel, (iv) a widget and a car, (v) a widget and a wheel, (vi) a car and a wheel, or (vii) a widget, a car and a wheel.

The phrase "based on" does not mean "based only on", unless expressly specified otherwise. In other words, the phrase "based on" describes both "based only on" and "based at least on".

Each process (whether called a method, algorithm or otherwise) inherently includes one or more steps, and therefore all references to a "step" or "steps" of a process have an inherent antecedent basis in the mere recitation of the term 'process' or a like term. Accordingly, any reference in a claim to a 'step' or 'steps' of a process has sufficient antecedent basis.

When an ordinal number (such as "first", "second", "third" and so on) is used as an adjective before a term, that ordinal number is used (unless expressly specified otherwise) merely to indicate a particular feature, such as to distinguish that particular feature from another feature that is described by the same term or by a similar term. For example, a "first widget" may be so named merely to distinguish it from, *e.g.,* a "second widget". Thus, the mere usage of the ordinal numbers "first" and "second" before the term "widget" does not indicate any other relationship between the two widgets, and likewise does not indicate any other characteristics of either or both widgets. For example, the mere usage of the ordinal numbers "first" and "second" before the term "widget" (1) does not indicate that either widget comes before or after any other in order or location; (2) does not indicate that either widget occurs or acts before or after any other in time; and (3) does not indicate that either widget ranks above or below any other, as in importance or quality. In addition, the mere usage of ordinal numbers does not define a numerical limit to the features identified with the ordinal numbers. For example, the mere usage of the ordinal numbers "first" and "second" before the term "widget" does not indicate that there must be no more than two widgets.

When a single device, component or article is described herein, more than one device, component or article (whether or not they cooperate) may alternatively be used in place of the single device, component or article that is described. Accordingly, the functionality that is described as being possessed by a device may alternatively be possessed by more than one device, component or article (whether or not they cooperate).

Similarly, where more than one device, component or article is described herein (whether or not they cooperate), a single device, component or article may alternatively be used in place of the more than one device, component or article that is described. For example, a plurality of computer-based devices may be substituted with a single computer-based device. Accordingly, the various functionality that is described as being possessed by more than one device, component or article may alternatively be possessed by a single device, component or article.

The functionality and / or the features of a single device that is described may be alternatively embodied by one or more other devices that are described but are not explicitly described as having such functionality and / or features. Thus, other embodiments need not include the described device itself, but rather can include the one or more other devices which would, in those other embodiments, have such functionality/features.

Devices that are in communication with each other need not be in continuous communication with each other, unless expressly specified otherwise. On the contrary, such devices need only transmit to each other as necessary or desirable, and may actually refrain from exchanging data most of the time. For example, a machine in communication with another machine via the Internet may not transmit data to the other machine for weeks at a time. In addition, devices that are in communication with each other may communicate directly or indirectly through one or more intermediaries.

## Claims

1. A circuit (1000), comprising:
a microcontroller (1018) comprising a controller-output port;
a step-down converter (1002) comprising a SDC-input pin, a SDC-enable pin, and
a SDC-output pin;
a battery power line (1008) coupled to the SDC-input pin;
a latch power line (1020) coupling the controller-output port to the SDC-enable pin;
a momentary switch (1010) coupled between the battery power line (1008) and
the SDC-enable pin;
the circuit **characterized by**:
a supply voltage supervisor (1004) comprising an SVS-input pin and an SVS-output pin;
a converter output line coupling the SDC-output pin to the supply voltage supervisor; and
an SVS output line (1026) coupling the SVS-output pin to the latch power line (1020).

2. The circuit (1000) of claim 1, comprising:
a resistor (1022) and a diode (1024) coupled in series to the latch power line between the controller-output port and the SDC-enable pin.

3. The circuit (1000) of claim 2, wherein the SVS output line (1026) is coupled to the latch power line (1020) between the resistor (1022) and the diode (1024).

4. The circuit (1000) of claim 3, wherein the latch power line (1020) comprises a node (1012), wherein the momentary switch (1010) is coupled to the node, and wherein the circuit (1000) comprises:
a pull down resistor (1014) coupled to the latch power line (1020) between the diode (1024) and the node (1012).

5. The circuit (1000) of any one of claims 1 to 4, wherein the microcontroller (114) comprises a power supply-input pin, and wherein the converter output line comprises a node (1016) coupling the converter output line to the power supply-input pin.

6. The circuit (1000) of any one of claims 1 to 5, comprising:
at least one battery coupled to the battery power line, wherein the at least one battery is configured to provide a voltage to the SDC-input pin of greater than 3.3V, preferably up to approximately 5V, and optionally up to 4.2V.

7. The circuit (1000) of any one of claims 1 to 6, wherein the step-down converter (1002) comprises:
a DC-to-DC power converter or a low-dropout regulator.

8. The circuit (1000) of any one of claims 1 to 7, wherein the supply voltage supervisor (1004) is configured to determine an under-voltage condition with respect to a supply voltage corresponding to the converter output line, and responsive to the under-voltage condition, to reset the microcontroller and hold the microcontroller in a reset state during the under-voltage condition.

9. The circuit (1000) of any one of claims 1 to 8, wherein the microcontroller (1018) comprises a stand-by mode, and wherein a battery drain rate of the circuit (1000) is zero during the stand-by mode.

10. The circuit (1000) of any one of claims 1 to 9, wherein the momentary switch (1010) is configured to allow a user to turn the circuit on and off.

11. The circuit (1000) of any one of claims 1 to 10, wherein the microcontroller (1018) comprises computer program instructions, which when executed by the microcontroller (1018), cause the microcontroller (1018) to programmatically shut down after a predefined period of nonuse.

12. The circuit (1000) of claim 11, wherein the microcontroller comprises a brown out reset threshold, and wherein the computer program instructions, when executed by the microcontroller (1018), cause the microcontroller (1018) to set the latch power line to a low logic state, the low logic state selected to cause a decaying of an output voltage of the converter output line to at least the brown out reset threshold, wherein, optionally, the brown out reset threshold is approximately 1.8V.

13. The circuit (1000) of claim 12, wherein the supply voltage supervisor (1004) comprises a low voltage threshold with respect to a supply voltage corresponding to the converter output line, and wherein the low logic state causes the supply voltage corresponding to the converter output line to drop below the low voltage threshold, wherein, optionally, the low voltage threshold is approximately 2V.

14. The circuit (1000) of any one of claims 1 to 13, wherein the circuit (1000) defines a portion of a blood glucose meter.

15. A method of providing a stand-by mode for a microcontroller, wherein the method is performed using the circuit (1000) of any one of claims 1 to 14, and wherein a battery drain rate of the circuit (1000) is zero during the stand-by mode.

## Patentansprüche

1. Eine Schaltung (1000), umfassend:
einen Mikrocontroller (1018) mit einem Controller-Ausgangsport;
einen Tiefsetzsteller (1002), der einen SDC-Eingangs-Pin, einen SDC-Freigabe-Pin und einen SDC-Ausgangs-Pin umfasst;
eine Batteriestromleitung (1008), die mit dem SDC-Eingangs-Pin gekoppelt ist;
eine Latch-Stromleitung (1020), die den Controller-Ausgangsport mit dem SDC-Freigabe-Pin verbindet;
einen momentanen schalter (1010), der zwischen die Batteriestromleitung (1008) und den SDC-Freigabe-Pin geschaltet ist;
wobei die Schaltung **gekennzeichnet ist durch**:
einen Versorgungsspannungswächter (1004), der einen SVS-Eingangs-Pin und einen SVS-Ausgangs-Pin umfasst;
eine Wandler-Ausgangsleitung, die den SDC-Ausgangs-Pin mit dem Versorgungsspannungswächter verbindet; und
eine SVS-Ausgangsleitung (1026), die den SVS-Ausgangs-Pin mit der Latch-Stromleitung (1020) verbindet.

2. Die Schaltung (1000) nach Anspruch 1, umfassend:
einen Widerstand (1022) und eine Diode (1024), die in Reihe mit der Latch-Stromleitung zwischen dem Controller-Ausgangsport und dem SDC-Freigabe-Pin geschaltet sind.

3. Die Schaltung (1000) nach Anspruch 2, wobei die SVS-Ausgangsleitung (1026) zwischen dem Widerstand (1022) und der Diode (1024) mit der Latch-Stromleitung (1020) verbunden ist.

4. Die Schaltung (1000) nach Anspruch 3, wobei die Latch-Stromleitung (1020) einen Knoten (1012) umfasst, wobei der momentane Schalter (1010) mit dem Knoten gekoppelt ist und wobei die Schaltung (1000) umfasst:
einen Pull-Down-Widerstand (1014), der zwischen der Diode (1024) und dem Knoten (1012) an die Latch-Stromleitung (1020) angeschlossen ist.

5. Die Schaltung (1000) nach einem der Ansprüche 1 bis 4, wobei der Mikrocontroller (114) einen Stromversorgungs-Eingangs-Pin umfasst, und wobei die Wandler-Ausgangsleitung einen Knoten (1016) umfasst, der die Wandler-Ausgangsleitung mit dem Stromversorgungs-Eingangs-Pin koppelt.

6. Die Schaltung (1000) nach einem der Ansprüche 1 bis 5, umfassend:
mindestens eine Batterie, die mit der Batteriestromleitung gekoppelt ist, wobei die mindestens eine Batterie so konfiguriert ist, dass sie dem SDC-Eingangs-Pin eine Spannung von mehr als 3,3 V, vorzugsweise bis zu etwa 5 V und optional bis zu 4,2 V, zuführt.

7. Die Schaltung (1000) nach einem der Ansprüche 1 bis 6, wobei der Tiefsetzsteller (1002) umfasst:
einen DC-DC-Leistungswandler oder einen Low-Dropout-Regler.

8. Die Schaltung (1000) nach einem der Ansprüche 1 bis 7, wobei der Versorgungsspannungswächter (1004) so ausgelegt ist, dass er einen Unterspannungszustand in Bezug auf eine der Wandler-Ausgangsleitung entsprechende Versorgungsspannung ermittelt und als Reaktion auf den Unterspannungszustand den Mikrocontroller zurücksetzt und den Mikrocontroller während des Unterspannungszustands in einem Reset-Zustand hält.

9. Die Schaltung (1000) nach einem der Ansprüche 1 bis 8, wobei der Mikrocontroller (1018) einen Standby-Modus aufweist und wobei die Batterieentladungsrate der Schaltung (1000) während des Standby-Modus null beträgt.

10. Die Schaltung (1000) nach einem der Ansprüche 1 bis 9, wobei der momentane Schalter (1010) so konfiguriert ist, dass er es einem Benutzer ermöglicht, die Schaltung ein- und auszuschalten.

11. Die Schaltung (1000) nach einem der Ansprüche 1 bis 10, wobei der Mikrocontroller (1018) Computerprogrammbefehle umfasst, die, wenn sie von dem Mikrocontroller (1018) ausgeführt werden, bewirken, dass sich der Mikrocontroller (1018) nach einer vordefinierten Zeit der Nichtnutzung programmgesteuert abschaltet.

12. Die Schaltung (1000) nach Anspruch 11, wobei der Mikrocontroller einen Brown-Out-Reset-Schwellenwert umfasst und wobei die Computerprogrammbefehle, wenn sie von dem Mikrocontroller (1018) ausgeführt werden, den Mikrocontroller (1018) veranlassen, die Latch-Stromleitung auf einen logischen Low-Zustand zu setzen, wobei der logische Low-Zustand so gewählt ist, dass er ein Absinken einer Ausgangsspannung der Wandler-Ausgangsleitung auf mindestens den Brown-Out-Reset-Schwellenwert bewirkt, wobei der Brown-Out-Reset-Schwellenwert optional etwa 1,8 V beträgt.

13. Die Schaltung (1000) nach Anspruch 12, wobei der Versorgungsspannungswächter (1004) einen Niederspannungsschwellenwert in Bezug auf eine der Wandler-Ausgangsleitung entsprechende Versorgungsspannung umfasst, und wobei der niedrige Logikzustand bewirkt, dass die der Wandler-Ausgangsleitung entsprechende Versorgungsspannung unter den Niederspannungsschwellenwert fällt, wobei der Niederspannungsschwellenwert optional etwa 2 V beträgt.

14. Die Schaltung (1000) nach einem der Ansprüche 1 bis 13, wobei die Schaltung (1000) einen Teil eines Blutzuckermessgeräts bildet.

15. Verfahren zum Bereitstellen eines Standby-Modus für einen Mikrocontroller, wobei das Verfahren unter Verwendung der Schaltung (1000) gemäß einem der Ansprüche 1 bis 14 durchgeführt wird und wobei die Batterieentladungsrate der Schaltung (1000) während des Standby-Modus null beträgt.

## Revendications

1. Un circuit (1000), comprenant :
un microcontrôleur (1018) comprenant un port de sortie de contrôleur ;
un convertisseur abaisseur (1002) comprenant une broche d'entrée SDC, une broche d'activation SDC et une broche de sortie SDC ;
une ligne d'alimentation de batterie (1008) couplée à la broche d'entrée SDC ;
une ligne d'auto-maintien (1020) couplant le port de sortie du contrôleur à la broche d'activation SDC ;
un commutateur momentané (1010) couplé entre la ligne d'alimentation de batterie (1008) et la broche d'activation SDC ;
le circuit **caractérisé par** :
un superviseur de tension d'alimentation (1004) comprenant une broche d'entrée SVS et une broche de sortie SVS ;
une ligne de sortie du convertisseur couplant la broche de sortie SDC au superviseur de tension d'alimentation ; et
une ligne de sortie SVS (1026) couplant la broche de sortie SVS à la ligne d'auto-maintien (1020).

2. Le circuit (1000) selon la revendication 1, comprenant :
une résistance (1022) et une diode (1024) couplées en série à la ligne d'auto-maintien entre le port de sortie du contrôleur et la broche d'activation SDC.

3. Le circuit (1000) selon la revendication 2, où la ligne de sortie SVS (1026) est couplée à la ligne d'auto-maintien (1020) entre la résistance (1022) et la diode (1024).

4. Le circuit (1000) selon la revendication 3, où la ligne d'auto-maintien (1020) comprend un nœud (1012), où le commutateur momentané (1010) est couplé au nœud, et où le circuit (1000) comprend :
une résistance de rappel à la masse (1014) couplée à la ligne d'auto-maintien (1020) entre la diode (1024) et le nœud (1012).

5. Le circuit (1000) selon l'une des revendications 1 à 4, où le microcontrôleur (114) comprend une broche d'entrée d'alimentation, et où la ligne de sortie du convertisseur comprend un nœud (1016) couplant la ligne de sortie du convertisseur à la broche d'entrée d'alimentation.

6. Le circuit (1000) selon l'une des revendications 1 à 5, comprenant :
une ou plusieurs batteries couplées à la ligne d'alimentation de batterie, où l'une ou plusieurs batteries est configurée pour fournir une tension à la broche d'entrée SDC supérieure à 3,3 V, de préférence jusqu'à environ 5 V, et optionnellement jusqu'à 4,2 V.

7. Le circuit (1000) selon l'une des revendications 1 à 6, où le convertisseur abaisseur (1002) comprend :
un convertisseur de puissance DC-DC ou un régulateur à faible chute de tension.

8. Le circuit (1000) selon l'une des revendications 1 à 7, où le superviseur de tension d'alimentation (1004) est configuré pour déterminer une condition de sous-tension par rapport à une tension d'alimentation correspondant à la ligne de sortie du convertisseur, et en réponse à la condition de sous-tension, pour réinitialiser le microcontrôleur et maintenir le microcontrôleur dans un état de réinitialisation pendant la condition de sous-tension.

9. Le circuit (1000) selon l'une des revendications 1 à 8, où le microcontrôleur (1018) comprend un mode veille, et où un taux de décharge de la batterie du circuit (1000) est nul pendant le mode veille.

10. Le circuit (1000) selon l'une des revendications 1 à 9, où le commutateur momentané (1010) est configuré pour permettre à un utilisateur de mettre le circuit sous tension et hors tension.

11. Le circuit (1000) selon l'une des revendications 1 à 10, où le microcontrôleur (1018) comprend des instructions de programme informatique qui, lorsqu'elles sont exécutées par le microcontrôleur (1018), amènent le microcontrôleur (1018) à s'éteindre par programmation après une période prédéfinie de non-utilisation.

12. Le circuit (1000) selon la revendication 11, où le microcontrôleur comprend un seuil de réinitialisation brown-out, et où les instructions de programme informatique, lorsqu'elles sont exécutées par le microcontrôleur (1018), amènent le microcontrôleur (1018) à mettre la ligne d'alimentation de verrouillage dans un état logique bas, l'état logique bas étant sélectionné pour provoquer une décroissance d'une tension de sortie de la ligne de sortie du convertisseur jusqu'à au moins le seuil de réinitialisation brown-out, où, optionnellement, le seuil de réinitialisation brown-out est d'environ 1,8 V.

13. Le circuit (1000) selon la revendication 12, où le superviseur de tension d'alimentation (1004) comprend un seuil de basse tension par rapport à une tension d'alimentation correspondant à la ligne de sortie du convertisseur, et où l'état logique bas provoque une chute de la tension d'alimentation correspondant à la ligne de sortie du convertisseur en dessous du seuil de basse tension, où, optionnellement, le seuil de basse tension est d'environ 2 V.

14. Le circuit (1000) selon l'une des revendications 1 à 13, où le circuit (1000) définit une partie d'un glucomètre.

15. Une méthode pour fournir un mode veille à un microcontrôleur, où la méthode est réalisée en utilisant le circuit (1000) selon l'une des revendications 1 à 14, et où un taux de décharge de la batterie du circuit (1000) est nul pendant le mode veille.
